# EUROPÄISCHE PATENTSCHRIFT

(11) **EP 1 901 948 B1**
(45) Veröffentlichungstag und Bekanntmachung des Hinweises auf die Patenterteilung: **14.09.2011**
(21) Anmeldenummer: 06723188.6
(22) Anmeldetag: 03.03.2006
(51) Int. Cl.: B60R 25/02, F16H 61/22

(54) **LENKRADVERRIEGELUNG AN EINEM KRAFTFAHRZEUG**
STEERING WHEEL LOCK FOR A MOTOR VEHICLE
DISPOSITIF DE VERROUILLAGE DE VOLANT POUR VÉHICULE À MOTEUR

(30) Priorität: 03.03.2005 EP 05004733
(43) Veröffentlichungstag der Anmeldung: 26.03.2008
(73) Patentinhaber: Huf Hülsbeck & Fürst GmbH & Co. KG, 42551 Velbert (DE)
(72) Erfinder: KIM, Tae-Sun, 52078 Aachen (DE); USELLI, Gianni, 42553 Velbert (DE)
(86) Internationale Anmeldenummer: PCT/EP2006/001943
(87) Internationale Veröffentlichungsnummer: WO 2006/092315

(56) Entgegenhaltungen:
- EP-A- 0 794 095
- US-A- 3 802 531
- US-A- 4 332 306
- US-A- 4 837 567
- US-A- 5 562 568

## Beschreibung

Die vorliegende Erfindung betrifft eine Lenkradverriegelung an einem Kraftfahrzeug mit einem Sperrbolzen , der mittels einer Handhabe von einer entsperrten, nicht mit der Lenkwelle in Eingriff stehenden, Position in eine sperrende, die Lenkwelle blockierende Position, überführt werden kann, mit einem durch die Handhabe gesteuerten Zündanlassschalter und einer Sicherung gegen unbeabsichtigtes Einfallen des Sperrbolzen in die sperrende Position während des Fahrbetriebes

Aus der Praxis sind Kraftfahrzeuge bekannt, die über mechanische Lenkradverriegelungen verfügen, die entweder mittels Schlüssel oder mittels Drehhandhaben betätigt werden. Um im Fahrbetrieb ein Eingriff des Sperrbolzens in die Lenkwelle, zu deren Blockierung, zu vermeiden sind Sicherungssysteme eingebaut. Dazu werden u.a. Hubmagnete verwendet die eine Schlüsseldrehung oder Handhabendrehung nur in einem bestimmten Bereich zulassen. Ein Drehung in die den Sperrbolzen entsperrende Position wird blockiert. Eine gattungsbildende bekannt. Leukradverriegelung ist aus der EP-A-0 794 095

Nachteilig an diesen Anordnungen ist der Fall, dass derartige Sperrsystem versagen können, wegen plötzlichen Stromausfall im Fahrzeug oder Materialermüdung, bzw. Schäden, so dass es trotzdem zu einem Blockieren während der Fahrt kommen kann, was aufgrund der Unfallgefahr unbedingt zu vermeiden ist.

Es stellt sich somit die Aufgabe eine Lenkradverriegelung zu schaffen, die diesen Nachteil vermeidet.

Die Aufgabe wird durch die in Anspruch 1 aufgeführten Merkmale gelöst.

Die Unteransprüche 2 bis 13 zeigen vorteilhafte Ausführungsformen und Weiterbildungen auf.

In den Zeichnungen ist die Erfindung schematisch in einem Ausführungsbeispiel ausgeführt:
- Fig.1:: Eine perspektivische Ansicht eines Ausführungsbeispiels einer Lenkradverriegelung für Kraftfahrzeuge
- Fig.2:: Eine Frontansicht eines Ausführungsbeispiels einer Lenkradverriegelung für Kraftfahrzeuge
- Fig. 3:: Einen Querschnitt durch eine Lenkungsverriegelung in Fahrzustand
- Fig. 4:: Einen Querschnitt durch eine Lenkungsverriegelung im Fahrzustand bei ausgefallenem 1. Hubmagnet
- Fig. 5:: Einen Querschnitt durch eine Lenkungsverriegelung im verriegelten Zustand

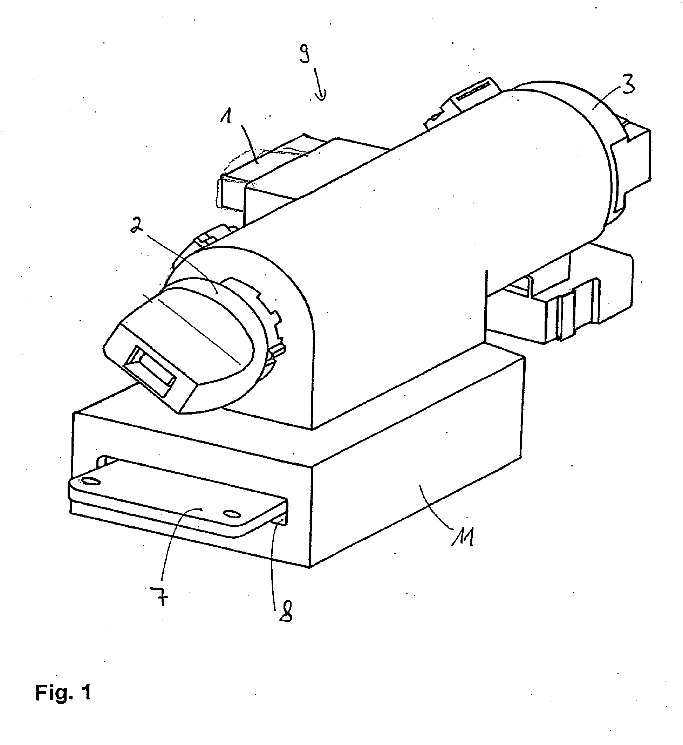

In Figur 1 ist eine mechanische Lenkradverriegelung 9 mit integriertem Zündanlassschalter 3 dargestellt, wobei der Zündanlassschalter 3 am Ende des Gehäuses 10 angeflanscht ist. Des weiteren ist unter dem Gehäuse des Lenkradschlosses 9 ein ID-Geber-Lesegerät 11 angebracht, in deren Aufnahme 8 eine Identifikationsgeber 7 eingeschoben werden kann.

Im Fall eines Passiv-Start Systems ist der Einschub des Identifikationsgebers 7 nicht notwendig, da der Code-Austausch zur Idenfikationsverifikation per Funkkommunikation erfolgt, sofern der Fahrzeugnutzer den Identifikationsgeber 7 bei sich trägt. Im Notfall, z. B. bei Batterieausfall des Identifikationsträgers 7, kann dieser in die Aufnahme 8 geschoben werden, wo der Code des Transponders dennoch ausgelesen werden kann.

Diese Einheit ist im Bereich des Lenkrades im Innenraum des Fahrzeuges gut zugänglich integriert.

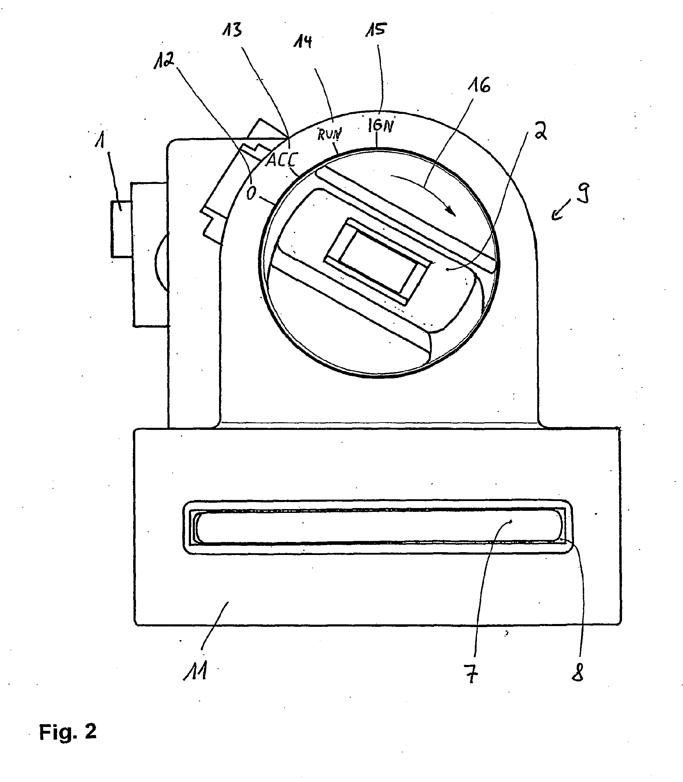

In Figur 2 ist eine Draufsicht auf diese Baueinheit dargestellt.

Es sind die 4 verschiedenen Drehstellungen der Drehhandhabe 2 zu erkennen. In der Position "0" ist das Fahrzeug abgeschaltet und die Lenkradverriegelung zur Einnahme der Verriegelungsposition freigegeben. Nach erfolgter Identifikation des Fahrzeugnutzers über den Identifikationsgeber 7 gelangt man durch Drehen 16 der Handhabe 2 in die weiteren Raststellungen ACC 13, RUN 14 und IGN 15.

In der Position "ACC" 13 wird der Strom für Nebenaggregate wie Radio etc. zugeschaltet. In Position "RUN" 14 wird der Strom zum Starten des Fahrzeuges freigeschaltet. In der folgenden Position "IGN" 15 wird Starter betätigt. Nach dem Anlassen des Fahrzeuges fällt die Handhabe wieder in die Position RUN 14 zurück.

Andere Schaltfolgen sind denkbar.

Bei Automatikfahrzeugen ist ein Zurückdrehen der Handhabe 2 im Fahrbetrieb solange blockiert, wie der erste Hubmagnet 4 bestromt wird. Die Bestromung wird mit Einlegen des Automatikwählhebels in die Parkstellung aufgehoben.

Bei Schaltfahrzeugen kann die Bestromung durch ein Betätigen eines Schalters aufgehoben werden.

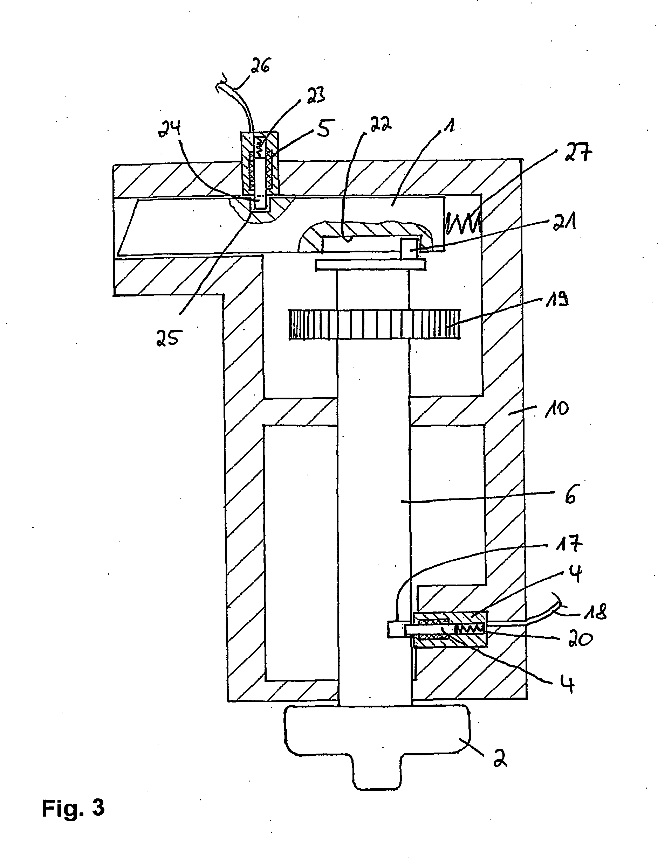

In Figur 3 bis 5 ist die Lenkungsverriegelung im Schnitt dargestellt. Die Drehhandhabe 2 ist mit einem Stellmittel 6, einer Drehwelle, gekoppelt. Ein erster Hubmagnet 4 wird durch Bestromung im Fahrbetrieb in eine Sperrstellung gebracht, d.h. der Magnetstößel ragt in eine Nut 17 des Stellmittels 6, so dass nur eine begrenzte Bewegung des Stellmittels 6 möglich ist. Die Bestromung erfolgt über eine elektrische Zuleitung 18. Auf dem Stellmittel 6 ist in diesem Ausführungsbeispiel ein Zahnrad 19 angeordnet, das die Drehbewegung der

Handhabe 2 auf einen Zündanlassschalter 3 überträgt.

In diesem Fall ist der Zündanlassschalter 3 seitlich am Gehäuse 10 angeordnet.

Wird der Hubmagnet 4 nicht bestromt, zieht die Feder 20 den Hubstößel zurück, so dass eine Drehung der Handhabe 2 in die "O"- Position 12 möglich ist.

Über einen exzentrischen Nocken 21 wird der Sperrbolzen 1 in die entsperrte Position gebracht. Der Nocken ragt in eine entsprechende Aussparung 22 des Sperrbolzens 1.

Ein zweiter Hubmagnet 5 ist im Gehäuse 10 mit direktem Einfluss auf den Sperrbolzen 1 integriert. Die Feder 23 drückt den Magnetstößel 24 aus dem Hubmagneten 5 heraus, so dass bei Nichtbestromung der Stößel 24 in die Ausnehmung 25 des Sperrbolzens einrückt. Die Bestromung erfolgt über die zweite elektrische Zuleitung 26.

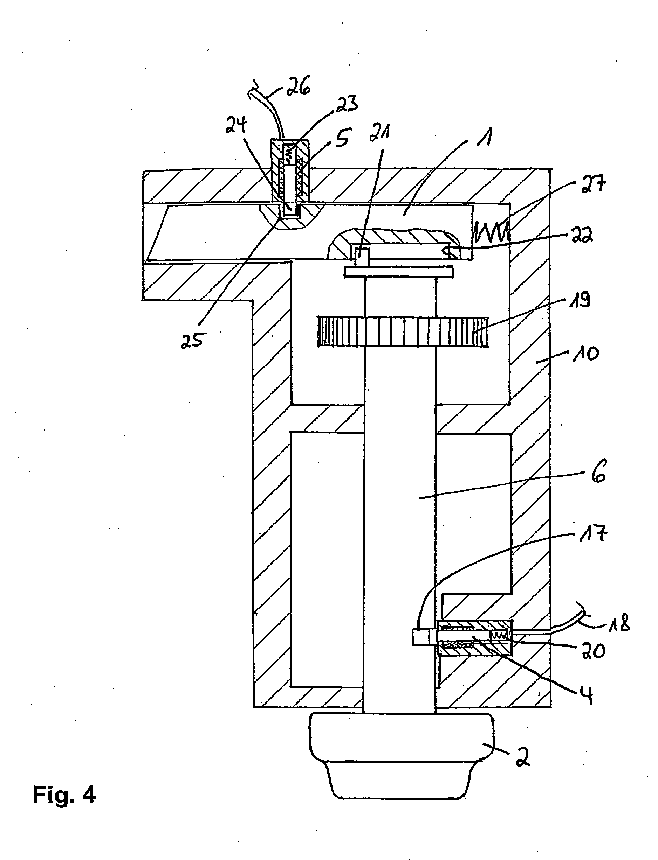

In Figur 4 ist der erste Hubmagnet 4 bei ausgefallener Bestromung dargestellt und die Handhabe in die "0-Position" 12 gedreht, so dass der Sperrbolzen 1 über den Nocken 21 freigegeben ist. Eine Feder 27 drückt den Sperrbolzen in die Sperrposition.

Durch den zweiten Hubmagneten 5, der noch nicht bestromt wurde, wird der Bolzen jedoch daran gehindert in die Sperrposition zu gelangen. Ein solcher Zustand kann auftreten, wenn entweder der erste Hubmagnet 4 ausfällt oder die Stomzufuhr zum ersten Hubmagneten 4 unterbrochen wird. Geschieht dies wenn das Fahrzeug noch in Bewegung ist, ohne dass der Sperrbolzen anderweitig blockiert wird, kann das Fahrzeug nicht mehr gesteuert werden.

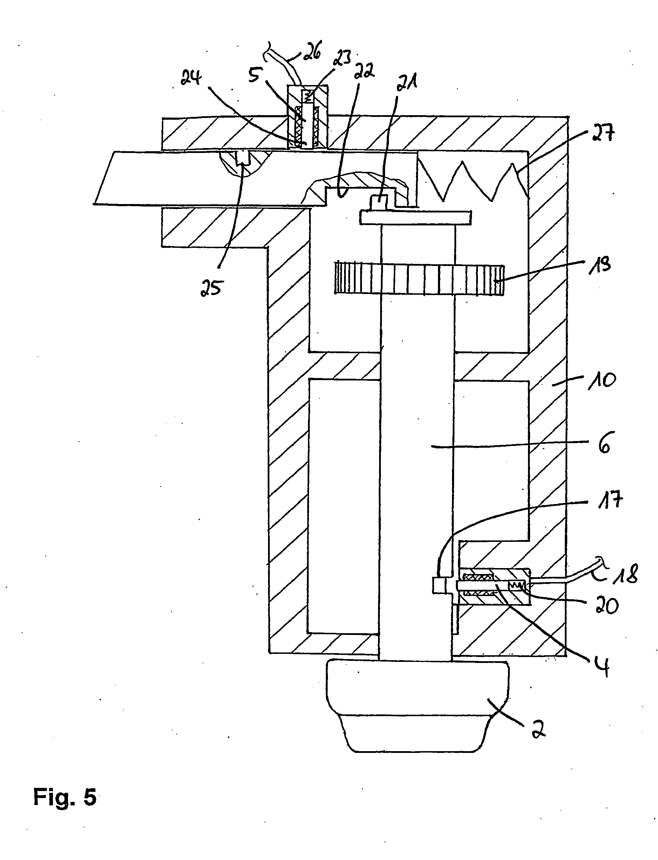

Erst, wie in Figur 5 zu sehen, wenn die Bestromung erfolgte, wird der federbelastete Magnetstößel 24 zurückgezogen und der Sperrbolzen 1 wird freigegeben, so dass dieser von der Feder 27 in die Sperrposition zum Eingriff mit der Lenkwelle gebracht wird.

Die Bestromung der zweiten Hubmagneten 5 wird dann sofort wieder unterbrochen. Der Stößel 24 wird daraufhin von der Feder 23 in Richtung Sperrbolzen 1 gedrückt.

Sobald der Sperrbolzen 1 durch Betätigung der Handhabe 2 in die Entsperrposition gebracht wird, rastet der Stößel 24 in die Ausnehmung 25 des Sperrbolzens 1 ein.

Die Bestromung des zweiten Hubmagneten 5, über die zweite elektrische Leitung 26, wird durch die Betätigung der Handbremse oder Abschließen des Fahrzeuges Ausgelöst.

Dadurch ist die Verwendung einer solchen Anordnung nicht nur bei Automatik-Fahrzeugen, sondern auch bei Fahrzeugen mit mechanischer Gangschaltung einsetzbar

## Patentansprüche

1. Lenkradverriegelung geeignet für ein Kraftfahrzeug mit einem Sperrbolzen (1), der mittels einer Handhabe (2) von einer entsperrten, nicht mit der Lenkwelle in Eingriff stehenden, Position in eine sperrende, die Lenkwelle blockierende Position, überführt werden kann, mit einem durch die Handhabe (2) gesteuerten Zündanfassschalter (3) und einer Sicherung (4, 5) gegen unbeabsichtigtes Einfallen des Sperrbolzens (1) in die sperrende Position während des Fahrbetriebes wobei zur Sicherung des Sperrbolzens (1) mindestens zwei Hubmagnete (4, 5) verwendet werden, wobei der erste Hubmagnet (4) auf das Stellmittel (6) der Handhabe (2) wirkt und ein zweiter Hubmagnet (5) auf den Sperrbolzen (1) wirkt, **dadurch gekennzeichnet, dass** der zweite Hubmagnet (5) in seiner nicht bestromten Ausgangslage den Sperrbolzen (1) in der entsperrten Position blockiert.

2. Lenkradverriegelung nach Anspruch 1, **dadurch gekennzeichnet, dass** der erste Hubmagnet (4) die Bewegungsfreiheit des Stellmittels (6) begrenzt, so dass im Fahrbetrieb eine Bewegung der Handhabe(2) in die den Sperrbolzen (1) zur sperrenden Position freigebende Stellung verhindert wird.

3. Lenkradverriegelung nach Anspruch 2 **dadurch gekennzeichnet, dass** der erste Hubmagnet (4) ein federbelasteter Hubmagnet ist, der zur Begrenzung des Stellweges des Stellmittels (6) bestromt wird.

4. Lenkradverriegtung nach Anspruch 3 , **dadurch gekennzeichnet, dass** der zweite Hubmagnet (5) ein federbelasteter Hubmagnet ist und dieser zur Freigabe des Sperrbolzens, zumindest kurzeitig, bestromt werden muss.

5. Lenkradverriegelung nach Anspruch 4, **dadurch gekennzeichnet, dass** die Bestromung des zweiten Hubmagneten (5) aufgrund eines Auslösesignals erfolgt.

6. Lenkradverriegelung, nach Anspruch 5, **dadurch gekennzeichnet, dass** die Bestromung des zweiten Hubmagneten (5) durch die Betätigung der Handbremse oder die Betätigung des Automatikwählhebels in Park-Stellung ausgelöst wird.

7. Lenkradverriegelung, nach Anspruch 5 **dadurch gekennzeichnet, dass** die Bestromung des zweiten Hubmagneten (5) durch das Abschließen des Fahrzeuges ausgelöst wird.

8. Lenkradverriegelung, nach Anspruch 5 **dadurch gekennzeichnet, dass** die Bestromung des zweiten Hubmagneten (5) durch das Motor-Aus-Signal bei gleichzeitig stehenden Rädern ausgelöst wird.

9. Lenkradverriegelung, nach Anspruch 5 **dadurch gekennzeichnet, dass** die Bestromung des zweiten Hubmagneten (5) durch die Betätigung eines separaten Schalters ausgelöst wird.

10. Lenkradverriegelung nach einem der vorhergehenden Ansprüche **dadurch gekennzeichnet, dass** die Handhabe (2) eine Drehhandhabe ist.

11. Lenkradverriegelung nach einem der Ansprüche von 1 bis 9 **dadurch gekennzeichnet, dass** die Handhabe (2) eine translatorisch bewegte Handhabe ist.

12. Lenkradverriegelung nach einem der vorhergehenden Ansprüche **dadurch gekennzeichnet, dass** zur berechtigten Bedienung der Handhabe (2) und damit des Fahrzeuges der Fahrzeugnutzer einen Identifikationsgeber (7), der einen fahrzeugspezifischen individuellen Code beinhaltet, in Besitz haben muss oder der Identifikationsgeber (7) in einer Aufnahme (8) eines in das Lenkradschloss integrierten Codelesers eingesteckt sein muss.

## Claims

1. Steering wheel lock suitable for a motor vehicle with a locking pin (1), which can be transferred by means of a handle (2) from an unlocked position, not in engagement with the steering shaft, into a locking position, blocking the steering shaft, with an ignition starter switch (3) controlled by the handle (2), and a security arrangement (4, 5) against unintended engaging of the locking pin (1) into the locking position during driving operation, wherein for securing the locking pin (1) at least two lifting magnets (4, 5) are used, wherein the first lifting magnet (4) acts on the adjusting means (6) of the handle (2) and a second lifting magnet (5) acts on the locking pin (1), **characterized in that** the second lifting magnet (5), in its non-energized initial position, blocks the locking pin (1) in the unlocked position.

2. Steering wheel lock according to Claim 1, **characterized in that** the first lifting magnet (4) delimits the freedom of movement of the adjusting means (6), so that in driving operation a movement of the handle (2) into the position freeing the locking pin (1) for the locking position is prevented.

3. Steering wheel lock according to Claim 2, **characterized in that** the first lifting magnet (4) is a spring-loaded lifting magnet, which is energized for delimiting the adjustment path of the adjusting means (6).

4. Steering wheel lock according to Claim 3, **characterized in that** the second lifting magnet (5) is a spring-loaded lifting magnet and the latter must be energized, at least briefly, for the release of the locking pin.

5. Steering wheel lock according to Claim 4, **characterized in that** the energizing of the second lifting magnet (5) takes place on the basis of a trigger signal.

6. Steering wheel lock according to Claim 5, **characterized in that** the energizing of the second lifting magnet (5) is triggered by the actuation of the hand brake or the actuation of the automatic selector lever in parking position.

7. Steering wheel lock according to Claim 5, **characterized in that** the energizing of the second lifting magnet (5) is triggered by the locking of the vehicle.

8. Steering wheel lock according to Claim 5, **characterized in that** the energizing of the second lifting magnet (5) is triggered by the engine-off signal with, at the same time, stationary wheels.

9. Steering wheel lock according to Claim 5, **characterized in that** the energizing of the second lifting magnet (5) is triggered by the actuation of a separate switch.

10. Steering wheel lock according to one of the preceding claims, **characterized in that** the handle (2) is a rotary handle.

11. Steering wheel lock according to one of Claims 1 to 9, **characterized in that** the handle (2) is a handle which is moved in a translatory manner.

12. Steering wheel lock according to one of the preceding claims, **characterized in that** for the authorized operation of the handle (2) and hence of the vehicle, the vehicle user must have in his possession an identification provider (7) which contains a vehicle-specific individual code, or the identification provider (7) must be inserted in a holder (8) of a code reader which is integrated into the steering wheel lock.

## Revendications

1. Verrouillage de volant convenant pour un véhicule automobile comprenant un boulon de blocage (1), qui peut être transféré au moyen d'une manette (2) d'une position débloquée, non engrenée avec l'arbre de direction, dans une position bloquante, bloquant l'arbre de direction, un démarreur (3) commandé par la manette (2) et un blocage (4, 5) contre un engagement involontaire du boulon de blocage (1) dans la position bloquante pendant le roulement, au moins deux aimants de levage (4, 5) étant utilisés pour le blocage du boulon de blocage (1), le premier aimant de levage (4) agissant sur le moyen de positionnement (6) de la manette (2) et un second aimant de levage (5) agissant sur le boulon de blocage (1), **caractérisé en ce que** le second aimant de levage (5) bloque le boulon de blocage (1) dans la position débloquée dans sa position de départ non alimentée en courant.

2. Verrouillage de volant selon la revendication 1, **caractérisé en ce que** le premier aimant de levage (4) limite la liberté de mouvement du moyen de positionnement (6) de telle sorte que, pendant le roulement, un déplacement de la manette (2) dans la position libérant le boulon de blocage (1) pour la position bloquante est empêché.

3. Verrouillage de volant selon la revendication 2, **caractérisé en ce que** le premier aimant de levage (4) est un aimant de levage sollicité par ressort, qui est alimenté en courant pour délimiter la course de positionnement du moyen de positionnement (6).

4. Verrouillage de volant selon la revendication 3, **caractérisé en ce que** le second aimant de levage (5) est un aimant de levage sollicité par ressort et cet aimant doit être alimenté au moins pendant un court instant pour la libération du boulon de blocage.

5. Verrouillage de volant selon la revendication 4, **caractérisé en ce que** l'alimentation en courant du second aimant de levage (5) s'effectue au moyen d'un signal de déclenchement.

6. Verrouillage de volant selon la revendication 5, **caractérisé en ce que** l'alimentation en courant du second aimant de levage (5) est déclenchée par l'actionnement du frein à main ou l'actionnement du sélecteur dans la position de stationnement.

7. Verrouillage de volant selon la revendication 5, **caractérisé en ce que** l'alimentation en courant du second aimant de levage (5) est déclenchée par la déconnexion du véhicule.

8. Verrouillage de volant selon la revendication 5, **caractérisé en ce que** l'alimentation en courant du second aimant de levage (5) est déclenchée par le signal d'arrêt de moteur dans le cas de roues tournant simultanément.

9. Verrouillage de volant selon la revendication 5, **caractérisé en ce que** l'alimentation en courant du second aimant de levage (5) est déclenchée par l'actionnement d'un interrupteur séparé.

10. Verrouillage de volant selon l'une quelconque des revendications précédentes, **caractérisé en ce que** la manette (2) est une manette rotative.

11. Verrouillage de volant selon l'une quelconque des revendications 1 à 9, **caractérisé en ce que** la manette (2) est une manette déplacée par translation.

12. Verrouillage de volant selon l'une quelconque des revendications précédentes, **caractérisé en ce que**, pour la commande autorisée de la manette (2) et donc du véhicule, l'utilisateur du véhicule doit être en position d'un transmetteur d'identification (7), qui contient un code individuel spécifique au véhicule, ou bien le transmetteur d'identification (7) doit être emboîté dans un logement (8) d'un lecteur de code intégré dans l'antivol de direction.
